(19) Europäisches Patentamt
European Patent Office
Office européen des brevets

(11) Publication number: 0 382 371
A1

(12) # EUROPEAN PATENT APPLICATION

(21) Application number: 90300706.0

(51) Int. Cl.[5]: C09D 5/02, C09D 133/00, C09D 129/00

(22) Date of filing: 23.01.90

(30) Priority: 06.02.89 US 306680

(43) Date of publication of application:
16.08.90 Bulletin 90/33

(84) Designated Contracting States:
AT BE CH DE DK ES FR GB GR IT LI LU NL SE

(71) Applicant: THE GLIDDEN COMPANY
925 Euclid Avenue
Cleveland Ohio 44115(US)

(72) Inventor: Craun, Gary Pierce
409 Crescent Drive
Berea, OH 44017(US)
Inventor: Hahn, Kenneth George
60 Bellus Road
Hinckley, OH 44233(US)
Inventor: Kunz, Barbara Lopez
20090 Great Oaks Lane
Strongsville,Ohio 44136(US)

(74) Representative: Johnston, Walter Paul et al
Legal Dept: Patents PO Box 6 Bessemer Road
Welwyn Garden City Hertfordshire AL7 1HD(GB)

(54) ## Crosslinkable coating composition.

(57) A room temperature or thermosetting crosslinkable coating composition comprising an aqueous emulsion of a binder, the binder comprising either

a) an addition polymer having carboxyl, hydroxyl, or amide functionality crosslinker but having no amine functionality together with a glycoluril crosslinker, the composition also comprising a cation-free opacifying pigment, or

b) an addition polymer having beta-hydroxy-ester functionality the polymer being self-crosslinkable,

in either case the composition having substantially no cations and a pH of less than 2.5 as result of the treatment of either the composition or its components with an ion exchange resin.

EP 0 382 371 A1

## CROSSLINKABLE COATING COMPOSITION

This invention relates to protective surface coating compositions and to processes for preparing them. It more particularly relates to aqueous paint coatings containing a room temperature curable or thermosetting polymeric binder based on an ion-exchange treated, aqueous emulsion of a functional addition polymer. The functional addition polymer comprises emulsion polymerised ethylenic monomers specifically excluding amine monomers, but including one or more carboxyl, hydroxyl or amide functional monomers or alternatively a beta-hydroxy ester monomer to produce an aqueous emulsion of the addition polymer. The emulsion is then treated in an ion-exchange process to produce a low pH polymer emulsion adapted either to self-crosslink by transesterification with respective beta-hydroxy ester groups on the addition polymer, or alternatively to crosslink using an added glycoluril crosslinker which reacts with carboxyl, hydroxyl or amide groups on the addition polymer in the presence of certain preferred titanium dioxide pigments.

Several patents disclose the use of acids, bases, metal salts, and organic metal complexes as catalysts for transesterifying polymers such as US 4362847; US 4376848; US 4332711; and US 4459393 wherein octoates or naphthenates of lead, zinc, calcium, barium, and iron are disclosed as transesterification catalysts.

Dante and Parry have shown that phosphonium halides, such as ethyltriphenyl phosphonium iodide, are efficient catalysts for (a) epoxide reactions with phenols to yield hydroxyl ethers (US 3477990), and (b) polyepoxide reactions with carboxylic acids or acid anhydrides (US 3547885). The patents suggest that polyepoxides and phenols can be reacted to form phenolic hydroxyl ethers with phosphonium salts as catalysts. The counterion of the phosphonium moiety is the anion portion of a carboxylic acid, or acid ester, such as in ethyltriphenyl phosphonium acetate (US 3948955).

US 4459393 discloses self-crosslinking thermosetting resin compositions obtained from the reaction of a beta-hydroxyalkyl ester of an alpha, beta-carboxylic acid with a primary mono- or polyamine to give a product having 1 to 2 amino hydrogens and further reacted with a polyglycidyl ether of a polyhydric phenol so that the final resin adduct has more than one beta-hydroxyalkyl ester group and amine groups having 1 to 2 amine hydrogen atoms per molecule.

US 4376848 discloses the preparation of water dilutable electrocoating compositions having a tertiary amino-containing basic binders by reacting a secondary amino group compound with an olefinically double bonded epoxy and the copolymerisation of this product with at least one ethylenically bonded polymerisable monomer wherein said binders can self-cure and be cured in combination with amine resins and/or phenolic resins.

Velko patents disclose resinous compositions curable through a transesterification curing mechanism based on conventional heavy metal catalysts. For instance, US 4423167 discloses a polymeric polyol adapted to be crosslinked with a polyester having at least two beta-alkoxyester groups in the presence of conventional transesterification catalysts. Similarly, US 4489182 is based on a crosslinking agent having at least two delta-hydroxy ester groups, while US 4423169 is based on a crosslinking agent having at least two beta- and/or gamma-ester groups, and US 4423168 is based on a crosslinking agent having at least two beta-amide ester groups. The Velko patents utilise as catalysts organic salts of conventional heavy metal catalysts such as lead, zinc, iron, tin and manganese.

US Patents such as as US 4442257 and US 4444941 and US 4540735 teach the use of certain acrylic latexes crosslinked with either tetramethylol glycoluril (TMGU) or dihydroxy dimethylol ethylene urea (DDEU) for low-temperature curing coatings. Rapid cure is achieved with these products by adding from 1.5% to 3.5% by weight of a 40% solution of paratoluene sulfonic acid where a package pH of about 1.0 to 2.0 results. However, stability of these catalysed products ordinarily is limited to 1-5 days at room temperature, and much less at elevated temperatures. Hence, the acid catalyst must be added at the time of use. Cured films of such polymer mixture often exhibit water sensitivity due to residual catalyst in the cured films. Without the catalyst, however, the coating has no solvent or water resistance unless baked at extremely high temperatures.

Abbey (US 4525260) discloses a cationic latex for cathodic electrocoating and specifically includes amine monomers. Abbey subsequently treats the cationic latex with an ion exchange resin but specifically to remove amino monomers and amino initiator fragments. Hence, the reference is specifically directed to removing amino fragments introduced in the emulsion process. As noted below, amine latexes are not operative in the present invention in that amine groups block both coreactivity with a glycoluril crosslinker and the self condensation of beta-hydroxyalkyl groups and inhibit the cure.

In US Patent 4812491 and US Patent 4728680, low temperature cure emulsion polymers particularly useful in paint coatings are disclosed based on a thermosetting polymeric binder composition comprising a

functional addition polymer containing functional hydroxyl or carboxyl groups, but free of amine groups, and a glycoluril derivative. The functional polymer and preferably the glycoluril derivative are treated with an ion exchange process step. The resulting resin provides a paint coating adapted to thermoset without the addition of acid catalysts. However, it has been found that these binders when pigmented with considerable amounts of conventional commercial titanium dioxide exhibit an upward pH drift of as much as one pH unit within a few days after cation exchange of the polymeric binder and/or the paint coating, which retards room temperature cure. Thus the commercial utility of process is effectively limited to darker colour paints. Conventional surface treatments of commercial titanium dioxide pigments include cations, particularly aluminium oxide cations, which eventually are attacked by acid and removed into the paint mixture thereby effective increasing the pH of the paint mixture.

It now has been found that substantially odour free, ambient room temperature or heat cured thermosetting aqueous polymer emulsion paints can be produced from a functional addition polymer emulsion which is ion exchanged to obtain a low pH, preferably below 2.5, to provide an activated emulsion that can be heat cured or ambient cured.

Ambient room temperature ordinarily is considered to be about 25°C plus/minus 5°C, although higher/lower application temperatures are encountered with consumer paints. Prior to this invention, conventional ambient temperature air drying consumer paints dried by evaporation of water and subsequent coalescence of binder polymer particles. Such binders were merely coalesced and not crosslinked. In accordance with this invention, the binder polymer particles coalesce but then further crosslink at ambient room temperature or are heat cured. The compositions of this invention can be applied at room temperature and air dried for a few days to remove water to produce a crosslinked paint coating.

According to the present invention there is provided a coating composition comprising an aqueous emulsion of a binder, the binder comprising either,

a) from 20 to 95 parts by weight of an addition polymer which is formed from a monomer mixture excluding amino functional monomers and comprising one or more carboxyl, hydroxyl or acrylamide monomers, the carboxyl, hydroxyl or amide groups being coreactive with a glycoluril, the binder also comprising from 5 to 80 parts by weight of a glycoluril, and the composition also comprising 5 to 35 parts by volume of non-volatile solids of a cation-free opacifying pigment, or

b) an addition polymer which is formed from a monomer mixture excluding amino functional monomers and comprising beta-hydroxy-ester monomers, the addition polymer being self curing by transesterification reaction between hydroxyl groups and beta-ester groups in the beta-hydroxy ester groups on application to a substrate; in either case the composition having substantially no cations and a pH of less than 2.5 as a result of the treatment of either the composition or its components with an ion exchange resin.

According to one aspect of the invention, the addition polymer contains one or more reactive hydroxyl, carboxyl, or amide groups, but is free of amine groups. The emulsion polymer comprises copolymerised ethylenically unsaturated monomers including at least about 2% copolymerised reactive monomers of acrylamide monomer, carboxyl monomer, or hydroxyl monomer.

The acrylamide monomers can be acrylamide, methacrylamide, ethacrylamide; and similar alkyl acrylamide and methacrylamide monomers including for example, N-methylol acrylamide, N-ethanol acrylamide, N-propanol acrylamide, N-methylol methacrylamide, N-ethanol methacrylamide, and similar acrylamide and methacrylamide monomers.

Carboxyl monomers are ethylenically unsaturated monomers containing carboxyl groups, including lower alkyl acrylate or methacrylate monomers such as acrylic, methacrylic, or ethacrylic acid. Other useful carboxyl reactants include itaconic, citriconic, fumaric, maleic, mesaconic and aconitric acids. The preferred acids are acrylic and methacrylic acids.

Hydroxyl monomers are ethylenically unsaturated monomers containing a hydroxyl group and can include for example, hydroxyl alkyl acrylates or methacrylates such as hydroxyethyl, hydroxypropyl, hydroxybutyl, hydroxyhexyl, hydroxyoctyl and similar lower alkyl hydroxy acrylates and methacrylates.

Ethylenically unsaturated monomers other than acrylamide, carboxyl, and hydroxyl monomers can include vinyl unsaturated monomers containing vinyl double bond unsaturation including, for example, vinyl esters such as vinyl acetate, vinyl propionate, vinyl butyrates, vinyl benzoate, isopropenyl acetate and like vinyl esters; vinyl amides, such as acrylamide and methacrylamide; and vinyl halides such as vinyl chloride. Ethylenically unsaturated monomers other than vinyl unsaturated monomers can include, for example, styrene, methyl styrenes and similar alkyl styrenes, chlorostyrene, vinyl toluene, vinyl naphthalene, divinyl benzene, diallyl phthalate and similar diallyl derivatives, butadiene, alkyl esters of acrylic and methacrylic acid and similar ethylenically unsaturated monomers.

Acrylic unsaturated monomers include alkyl esters of acrylic or methacrylic acid having an alkyl ester portion containing between 1 to 12 carbon atoms as well as aromatic derivatives of acrylic and methacrylic

acid, and can include, for example, acrylic and methacrylic acid, methyl acrylate and methacrylate, ethyl acrylate and methacrylate, butyl acrylate and methacrylate, propyl acrylate and methacrylate, 2-ethyl hexyl acrylate and methacrylate, cyclohexyl acrylate and methacrylate, decyl acrylate and methacylate, isodecylacrylate and methacrylate, benzyl acrylate and methacrylate, and various reaction products such as butyl, phenyl, and cresyl glycidyl ethers reacted with acrylic and methacrylic acids. The ethylenically unsaturated monomers can be copolymerised by free radical induced addition polymerisation using peroxy catalyst, common redox catalysts, ultraviolet radiation, or the like.

A preferred emulsion polymer is one which is free of amine groups and which comprises by weight between 20% and 95% acrylate or methacrylate monomers, between 0% and 20% (preferably 1 and 20%) functional monomer selected from a carboxyl monomer, a hydroxyl monomer, or acrylamide monomer, or mixtures of such functional monomers, and 0% to 50% other ethylenically unsaturated monomer. A particularly preferred emulsion polymer comprises a latex polymer consisting of copolymerised monomers of 20%-50% methyl methacrylate, 0%-20% ethyl acrylate, 20%-50% butyl acrylate, and 1%-20% of a hydroxyl-bearing monomer.

The reactive emulsion polymer containing reactive hydroxyl, carboxyl, or amide groups can be crosslinked by reaction with a glycoluril. Glycolurils are disclosed in US Pat. No. 4064191 and are also known as acetyleneureas. Glycolurils are derived by reacting two moles of urea with one mole of glyoxal to provide a complex ring structure as shown in US 4540735; where substitute constituents can be a hydrogen, or a lower alkyl radical, or can be methylolated partially or fully by reacting with 1 to 4 moles of formaldehyde to provide a methylol glycoluril.

The preparation of various glycolurils are illustrated in US Patent No. 4064191 such as tetramethylol glycoluril, tetrabutoxymethyl glycoluril, partially methyolated glycoluril, tetramethoxymethyl glycoluril, and dimethyoxydiethoxy glycoluril. Useful glycoluril derivatives include for example, mono- and dimethylether of dimethylol glycoluril, the trimethylether of tetramethylol glycoluril, the tetramthylether of tetramethylol glycoluril, tetrakisethoxymethyl glycoluril tetrakisopropoxy-methyl glycoluril, tetrakisbutyoxymethyl glycoluril, tetrakisamyloxymethyl glycoluril, tetrakishexoxymethyl glycoluril and the like. Glycoluril derivatives can further include dimethylol dihydroxyl ethylene urea which is believed to have the chemical structure as follows:

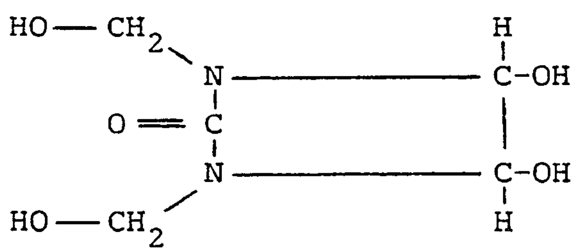

The cation free opacifying pigments useful in this aspect of the invention are generally pigments having a refractive index of at least about 1.8. Typical white opacifying pigments include rutile and anatase titanium dioxide, lithopone, zinc sulfide, lead titanate, antimony oxide, zirconium oxide, titanium calcium, white lead, titanium barium, zinc oxide, leaded zinc oxide, mixtures of the same, and like pigments. Preferred white inorganic cation-free opacifying pigments are anatase and rutile titanium dioxide. These preferably have a weight average particle size between about 0.2 and 0.4 microns. Titanium yellow and like pigments having a high refractive index can be utilised as opacifying pigments as well as imparting tints to the paint.

Although most opacifying pigments are white, all opacifying pigments having a high index of refraction above about 1.8 should be considered an opacifying pigment for the purpose for this invention regardless of its tinting (tinctorial) effect on the resulting paint film.

Opacifying pigments comprise at least about 5% and up to about 40% on a dry solids volume basis of the latex paint and preferably between about 10% to 25% on a dry solids volume basis. Ordinary paint films are usually about 1 to 3 mils thick when applied by brush or roller, and in such instance, between about 5% and about 25% opacifying pigments such as rutile $TiO_2$ on a dry solids volume basis is required for the opacified paint of this invention.

Preferably the pigments are produced without any surface treatment and merely washed, micronised and filtered at the end of the pigment manufacturing process without any surface treatment. In particular, all post treatment of the pigment with cationic materials is avoided to produce a reactive cation-free pigment surface.

If commercial titanium dioxide pigments are utilised, these pigments typically contain cationic surface

treatments, typically an aluminium oxide treatment or coating, which must be removed to render the pigment useful in this invention. Such commercial cations surface coatings applied to pigment surfaces can be removed by treatment with strong acids, followed by rinsing with deionised water.

Cation free opacifying pigments contain less than 0.5% by weight residual cations and preferably are essentially free of cations.

By using untreated cation free titanium dioxide or conventional titanium dioxide with cationic surface treatments removed, the pH drift is stabilised and commercially useful light colour paints can be produced. Excellent room temperature cures can be achieved. A further advantage of cation-free rutile or anatase is that the resulting pigmented paint coating is substantially free of thixotropic properties.

According to another aspect of the invention the addition copolymer is self curing in which case hydroxyl and ester groups in the form of a beta-hydroxy ester group are introduced into the copolymer by emulsion copolymerising ethylenically unsaturated monomers including a beta-hydroxy ester monomer along with other ethylenic monomers. The inclusion of acrylic monomer is preferred.

A beta hydroxy ester monomer is an ethylenically unsaturated monomer generally containing the theoretical beta-hydroxy ester chemical structure as follows:

$$R-\overset{\overset{\displaystyle O}{\|}}{C}-O-CH_2-CH_2-OH$$

where the hydroxyl group is attached to the second (beta) carbon atom relative to the ester group and R is an alkyl chain containing terminal ethylenic carbon-to-carbon unsaturation. Any one of the hydrogens on the alpha or beta carbons can be substituted with a methyl group or similar short chain alkyl group. It is thought that the ester group can form a loose six-membered, hydrogen bonding ring with the beta-hydroxyl group, which is known to weaken the beta-ester group and provide a weak ester bond to facilitate cleavage of the ester group by transesterification. Other beta-hydroxy ester groups in the same polymeric structure can function as a hydroxyl component which transesterifies with the weakened beta-ester group to form a transesterification crosslink between the beta ester and the beta hydroxyl groups of different beta-hydroxyl ester groups on the same acrylic polymer.

Suitable beta hydroxy monomers can be produced by reacting an acrylic or methacrylic acid with ethylene oxide or propylene oxide to produce the beta-hydroxy ester structure in conjunction with an ethylenically unsaturated double bond. Beta-hydroxylate ester monomers include hydroxyl alkyl acrylates such as 2-hydroxy ethyl acrylate and methacrylate, 2-hydroxypropyl acrylate and methacrylate, and similar hydroxyl alkyl acrylates.

Acrylic monomers include monomers such as lower alkyl esters of acrylic or methacrylic acid having an alkyl ester portion containing between 1 to 12 carbon atoms as well as aromatic derivatives of acrylic and methacrylic acid. Useful acrylic monomers include, for example, acrylic and methacrylic acid, methyl acrylate and methacrylate, ethyl acrylate and methacrylate, butyl acrylate and methacrylate, propyl acrylate and methacrylate, 2-ethyl hexyl acrylate and methacrylate, cyclohexyl acrylate and methacrylate, decyl acrylate and methacrylate, isodecylacrylate and methacrylate, benzyl acrylate and methacrylate.

Other ethylenically unsaturated monomers containing carbon-to-carbon unsaturation include vinyl monomers, allylic monomers and acrylamide monomers. Examples of vinyl monomers are vinyl esters, vinyl halides, vinyl aromatic hydrocarbons vinyl aliphatic hydrocarbons and vinyl alkyl ethers.

Vinyl esters include vinyl acetate, vinyl propionate, vinyl butyrates, vinyl benzoates, vinyl isopropyl acetates, and similar vinyl esters. Vinyl halides include vinyl chloride, vinyl fluoride, and vinlidene chloride. Vinyl aromatic hydrocarbons include styrene, methyl styrenes and similar lower alkyl styrenes, chlorostyrene, vinyl toluene, vinyl naphthalene, divinyl benzoate, and cyclohexene. Vinyl aliphatic hydrocarbon monomers include alpha olefins such as ethylene, propylene, isobutylene, and cyclohexyl as well as conjugated dienes such as butadiene, methyl-2-butadiene, 1,3-piperylene, 2,3 dimethyl butadiene, isoprene, cyclopentadiene, and dicyclopentadiene. Vinyl alkyl ethers include methyl vinyl ether, isopropyl vinyl ether, n-butyl vinyl ether, and isobutyl vinyl ether.

High levels of carboxyl functional monomers should be avoided. The number average molecular weight of suitable beta-hydroxy ester addition polymers covers the range of values typically obtained for such latexes, which are usually between 10,000 and 1,000,000.

On a weight basis, the functionally reactive beta-hydroxy ester addition polymer consists of copolymerised ethylenic monomers comprising between 1% and 50% by weight beta-hydroxyl ester monomer with the balance being other ethylenically unsaturated monomers other than amine monomers. Preferred beta-hydroxy copolymers are acrylic copolymers containing between 1% and 99% acrylic monomers and particularly preferred beta-hydroxy ester acrylic copolymers comprise between 5% and 30% beta-hydroxy ester monomer and between 70% and 95% of other acrylic monomers with the balance being other ethylenically unsaturated monomers.

In accordance with this invention, the beta-hydroxy ester addition polymer or carboxyl hydroxyl or amide functional polymers are substantially free of copolymerised ethylenically unsaturated amino compounds. Examples of excluded ethylenically unsaturated basic amino compounds are aminoalkyl esters of acrylic and/or methacrylic acid such as the aminomethyl, aminoethyl, aminopropyl, aminobutyl and aminohexyl esters, N-aminoalkyl acrylamides or methacrylamides, such as aminomethylacrylamide, 1-aminoethyl-2-acrylamide, 1-aminopropyl-2-methacrylamide, N-1-(N-butylamino) propyl-(3)-acrylamide and 1-aminohexyl-(6)-acrylamide and 1-(N,N,-dimethylamino)-ethyl-(2)-methacrylamide, 1-(N,N-dimethylamino)-propl-(3)-acrylamide and 1(N,N-dimethylamino)-hexyl-(6)-methacrylamide.

According to the present invention there is provided a process for producing a coating composition which comprises the steps of

(i) copolymerising ethylenically unsaturated monomers in an aqueous medium in the presence of surfactants and initiators, the unsaturated monomers including carboxyl, hydroxyl or acrylamide monomers but excluding amino functional monomers, to produce an addition polymer emulsion,

(ii) treating the addition polymer by contact with an ion exchange resin to remove cations from the composition so as to produce a polymer emulsion having a pH of less than 2.5, and

(iii)combining the ion-exchanged polymer emulsion from (ii) with a cation-free opacifying pigment having less than 0.5% by weight residual cations.

In this process a glycoluril derivative is preferably added to the composition in order to provide crosslinking. The glycoluril derivative can be treated separately with an ion exchange resin and thereafter mixed with the polymer emulsion treated with the ion exchange resin. Alternatively the glycoluril derivative can be mixed with the polymer emulsion prior to treatment with the ion exchange resin.

According to the present invention there is also provided a process for producing a coating composition which comprises the steps of

(i) copolymerising ethylenically unsaturated monomers in an aqueous medium in the presence of surfactants and initiators, the monomers including a beta-hydroxy ester monomer but excluding amine monomers to produce a self curing emulsion polymer having pendant beta-hydroxy ester groups.

(ii) treating the polymer emulsion by contact with an ion-exchange resin so as to produce a polymer emulsion with a pH of less than 2.5.

In accordance with the processes of this invention, the addition copolymer is produced by emulsion copolymerisation of the ethylenically unsaturated monomers in an aqueous polymerisation medium to produce resulting emulsion polymer (latex). The emulsion polymer of this invention specifically does not contain amine groups, and is adapted either to cure by reaction of the carboxyl, hydroxyl or amide groups with the glycoluril derivative in the presence of the pigment or else to be self-curing between internal hydroxyl groups and internal beta-ester groups. Amine groups block reactivity, inhibit the cure, and render the process of this invention inoperative in either case.

In accordance with the process of this invention, the ion-exchange process for removing undesirable cations from the polymeric binder can be utilised in either case in conjunction with specific opacified pigments substantially free of cations or cationic surface treatment. In the case of the self curing polymers the pigment is optional. The polymeric binder is treated with an ion-exchange resin to remove undesirable cations.

Ion-exchange treatment is best effected with protonated cation exchange resin. Protonated cation exchange resin typically comprises crosslinked macroreticular polystyrene beads having sulfonic acid surface groups, that is, the beads have a sulphonated surface. Bead sizes are typically about 1 millimeter in diameter more or less.

In the present invention, the coating is not externally catalysed, but is brought into intimate contact with a protonated cation exchange resin, such as Amberlite 200 CH from Rohm and Haas. This contact can be effected by adding from 1%-100% by weight of the exchange resin to the coating with agitation and mixing until the pH has stabilised below 2.5, and typically around 1.2-1.8. The mixture can be strained through a filter medium such as linen cloth of a size small enough to remove all of the solid exchange resin, whereby the filtered coating exhibits no changes in pH or viscosity over 3 months or longer. The coating can be passed over a column bed of the exchange resin at a rate which yields a coating pH of less than 2.5, preferably around 1.2-1.8. The ion-exchange imparts no change in stability or in pH or viscosity over a 3-month period.

In practice, the ethylenic monomers can be polymerised in an aqueous medium at a pH preferably between about 1.0 and 6 to form the polymer having a pH above 2.5. Generally, the polymerisation is conducted at a temperature of about 20°-100°C in the presence of a free radical generating initiator. Commonly used free radical initiators include various peroxygen compounds such as the persulphates, benzoyl peroxide, t-butyl hydroperoxide, cumene hydroperoxide, di-t-butyl perphthalate, pelargonyl peroxide

and 1-hydroxycyclohexyl hydroperoxide. Particularly preferred as polymerisation initiators are the watersoluble peroxygen compound such as hydrogen peroxide and the sodium, potassium and ammonium persulphates used by themselves or in activated "redox" type systems. Typical "redox" systems include alkali metal persulphates with a reducing substance such as a polyhydroxy phenol. The amount of initiator used will generally be in the range between about 0.1 to 3% by weight based on the monomers. Usually the initiator will all be charged at the outset of the polymerisation, although incremental addition or proportioning of the initiator can be often employed.

Emulsifiers used to prepare the latices of this invention are the general types of anionic and non-ionic emulsifiers. Exemplary anionic emulsifiers which may be employed are: alkali metal or ammonium salts of the sulphates of alcohols having from 8 to 18 carbon atoms, such as sodium lauryl sulphates, ethanol-amine lauryl sulphates ethylamide lauryl sulphate; alkali metal and ammonium salts of sulphonated petroleum or paraffin oils, sodium salts of aromatic sulphonic acids, such as dodecane-1-sulphonic acid and octadiene-1-sulphonic acid; aralkylsulphonates such as sodium isopropyl benzene sulphonate, sodium dodecyl benzene sulphonate and sodium isobutyl naphthalene sulphonate; alkali metal and ammonium salts of sulphonated dicarboxylic acid esters such as sodium dioctyl sulphossuccinate, disodium N-octadecylsulphosuccinamate; alkali metal or ammonium salts of free acids of complex organic mono- and diphosphate esters and the like. So-called non-ionic emulsifiers such as octyl- or nonylphenyl polyethoxyethanol and the like may also be used.

The amount of emulsifier used can be from about 0.01 to 6% or more by weight of the monomers. All of the emulsifier may be added at the beginning of the polymerisation or may be added incrementally or by proportioning throughout the run. Typical polymerisations for the preparation of the emulsion polymers of this invention are conducted by charging the monomers into the polymerisation reactor which contains water and a portion of the emulsifying agent. The reactor and its contents are heated and the initiator added.

A pigmented or further pigmented coating can be prepared by blending the emulsion with cation-free opacifying pigments. Cation-free opacifying pigments contain less than about 0.5% by weight residual aluminium and preferably are essentially free of cations including aluminium cations. A uniform dispersion of pigments can be obtained, using conventional anionic and nonionic surfactants. The resulting self-curing emulsion polymer is stable and shows no flocculation over extended periods of time. Accordingly, a stable dispersion can be made using conventional surfactants which subsequently can be acidified by cation exchange to provide compatibility and stability in let down steps and pigment grinds if desired. Conventional basic surfactant can be used as the dispersant to enable a dilatent-free pigment grind. Cation exchange prevents settling and flocculation and further prevents cure inhibition in the final paint.

According to the present invention there is also provided a process of producing a coated substrate which comprises applying a coating composition as hereinbefore described to the substrate and allowing the composition to crosslink.

The compositions can be applied by any conventional means such as by brushing, spreading, spraying or by roller.

The compositions can be caused to crosslink either by leaving them at room temperature or by applying a moderately elevated temperature.

The invention is further illustrated by the following examples. All percentages in the examples are by weight.

## EXAMPLE 1

### (a) Emulsion Polymer.

An emulsion polymer was produced from the following components:

| | Grams |
|---|---|
| Deionised Water | 85.6 |
| Sodium Dihexyl Sulphosuccinate | 0.5 |
| Ammonium Persulphate | 0.273 |
| Sodium Bis-tridecyl Sulphosuccinate | 0.319 |
| Butyl Acrylate | 39.0 |
| Methyl Methacrylate | 39.0 |
| N-isobutoxymethylol Acrylamide | 12.0 |
| 2-hydroxyethyl Acrylate | 6.0 |
| Glacial Methacrylic Acid | 4.0 |
| Sodium Formaldehyde Sulphoxilate | 0.180 |
| Tertiary Butyl Hydroperoxide | 0.012 |

The emulsion polymer is prepared as follows:
The monomers are polymerised in a conventional reactor using a standard procedure of metering in the main body of monomer into the heated water plus surfactant over 2- to 5-hour intervals. Batch loading of monomer is possible but not preferred. Changing the monomer composition during the feed is also possible and may lead to faster cure and/or cleaner batches. The reaction is run at 60°-86°C. The sodium formaldehyde sulphoxilate and t-butyl hydroxperoxide are added after the main body of monomers have been polymerised in order that traces of free monomers are reacted. The emulsion polymer latex is particularly suitable as a binder system for a paint composition. The latex has a non-volatile content of 52% by weight; a density of 8.9 lb./gallon; and has a pH of 3.1.

b) Paint Coating.

The foregoing emulsion polymer (a) can be utilised to produce a useful paint composition which can be applied to a substrate and cured at low temperatures such as 10 minutes at 50°C, or an oven bake and/or infrared heat to achieve a substrate surface temperature of from about 40°C to about 130°C. A typical paint composition is as follows:

| | Grams |
|---|---|
| Emulsion Polymer (a) | 666 |
| Cymel 1175[1] | 175 |
| Foamaster O (defoamer)[2] | 1 |
| Isopropanol | 34 |
| Butyl Cellosolve[3] | 20 |

[1]Dihydroxy dimethylol ethylene urea, 45% non-volatile (American Cyanamid Company).
[2]Diamond Shamrock Corporation.
[3]Union Carbide Corporation.

This coating has a pH of 4.2. About 200 grams thereof were combined with 100 grams Amberlite 200CH (macroreticular, strongly acidic, cation exchange resin from Rohm and Haas Corporation). After stirring for 30 minutes, the coating was strained through linen cloth to remove the cation exchange resin. The product has a pH of 1.5 and was combined with about 35 grams of untreated, cation-free titanium dioxide in accordance with this invention.

Superior extended room temperatures and elevated temperature stability was achieved which was a substantial improvement over similar compositions containing conventional titanium dioxide having an aluminium oxide surface treatment.

EXAMPLE 2

Rutile titanium dioxide was obtained without surface treatment, but contained about 0.5% residual aluminium from its manufacturing process. The pigment was washed, micronised, and filtered without any surface treatment. The essentially cation-free titanium dioxide was incorporated into a polymeric binder comprising reactive emulsion polymer and glycoluril at a level of 200 pounds pigment per 100 gallons emulsion. This is identified below as "Grind #2". This paint was compared with similarly prepared paint using conventional commercial titanium dioxide having a surface treatment containing aluminium oxide, at about 3.5% aluminium. This is identified below as "Grind #1".

| Letdown | Grams |
|---|---|
| Acrylic Copolymer Emulsion | 374.08 |
| Glycoluril (Cymel 1172) | 98.2 |
| Defoamer | 1.0 |
| Butyl Carbitol Acetate | 20.0 |

| | Grind #1 | Grind #2 |
|---|---|---|
| Deionised Water | 65.0 | 65.0 |
| Defoamer | 0.40 | 0.40 |
| Surfactant | 4.5 | 4.5 |
| Polyethylene Surfactant | 4.5 | 4.5 |
| | pH = 2 | pH = 2 |
| Surface-treated $TiO_2$ | 105.2 | |
| | pH = 3.60 | |
| Low-cation $TiO_2$ | | 105.2 |
| | | pH = 2 |
| Silica | 250.4 | 250.4 |
| | pH = 5.16 | pH = 3.75 |
| Deionised Water | 4.5 | 4.5 |
| Combine each #1 and #2 with 246.5 grams letdown | | |
| | pH = 4.74 | pH = 4.02 |

<u>Improved pH Stability on $TiO_2$-Containing Cation Exchange Coatings</u>

Sample coatings #1 and #2 comprising about 450 gms. of each coating were put in 1-litre beakers. With mixing, 100 gms. of Amberlite 200 CH cation exchange resin was added to each. After 30 minutes of mixing, the samples were filtered to remove exchange resin, and tested as follows:

| | Sample #1 | Sample #2 |
|---|---|---|
| pH, init. | 2.07 | 1.90 |
| After 1 hour | 2.23 | 1.90 |
| After 1-3/4 hours | 2.31 | 1.89 |
| After 64 hours | 3.02 | 2.35 |

The experimental low-cation titanium dioxide gave superior stability. Immediately after treatment, both were applied on sealed Leneta paper with a 75µ bird coater, and baked for 2 min. at 120 °C.

Sample #1 gave 20-22 MEK rubs; Sample #2 gave 40 MEK rubs, indicating a better cure. Additional samples were similarly coated and allowed to dry ambient (23 °C, 16% R.H.).

| | Sample 1 | | | Sample 2 | |
|---|---|---|---|---|---|
| | Water Rubs | MEK Rubs | | Water Rubs | MEK Rubs |
| 1 hour (approx.) | 22 | 8 | 50min. | 70 | 16 |
| $1\frac{1}{2}$ hr. | 28 | 9 | 70min. | 200 soft | 20 |
| 66 hrs. | 200, not soft | 15 | 2 hrs. | 200 soft | 21 |
| | | | 66 hrs. | 200,not soft | 28 |

After 4 days, additional air-dry samples were tested, with the aged coatings. Sample #1 had a 3.05 pH and Sample #2 had a 2.36 pH.

| | Sample 1 | | Sample 2 | |
|---|---|---|---|---|
| | Water Rubs | MEK Rubs | Water Rubs | MEK Rubs |
| 1 hour | 6 | 6 | 10 | 7 |
| 2 hours | 16 | 7 | 20 | 10 |
| 5 hours | 18 | 10 | 26 | 14 |
| 8.5 hrs. | 18 | 9 | 119 | 19 |

This demonstrated that low-cation titanium dioxide is better than standard surface treated titanium dioxide.

The following examples illustrate the advantages of untreated, cation-free anatase over conventional rutile titanium dioxide.

## EXAMPLE 3

| Raw Material | Weight |
|---|---|
| Acrylic Copolymer Emulsion | 374 |
| Glycoluril (Cymel 1175) | 828.2 |
| Premix Stabiliser (surfactant) | 25 |
| Defoamer | 1 |
| Deionised Water | 149 |
| **Grind** | **Weight** |
| Deionised Water | 139 |
| Defoamer | 1 |
| Surfactant | 9 |
| Polyethylene Oxide Surfactant | 9 |
| Commercial Titanium dioxide (3.5% aluminium) | 210 |
| Silica | 501 |

Add grind to letdown and mix 16 hours minimum. After mixing 16 hours, a pH probe was put in the paint. Small quantities of Amberlite 200 CH (protonated cation exchange resin from Rohm & Haas) were added. When pH stabilised, samples were pulled, applied by 3 mil. bird coater to Leneta paper, and baked

2 minutes @ 120°C hot air. Cure was checked each time. After completion, the sample was aged and periodically checked for pH and cure.

| Total gms. exchange resin added, cumulative | Stabilised pH | Cure (MEK Rubs) |
|---|---|---|
| 0 | 4.63 | 5 |
| 10.0 | 3.20 | 16-18 |
| 15.0 | 3.00 | 27-28 |
| 42.0 | 2.20 | 53-55 |
| 68.0 | 2.01 | 78-95 |
| 95.0 | 1.99 | 83-110 |
| Aged 96 hrs. @ R.T. | 2.92 | 83-110 |
| Aged 96 hrs. @ 50°C | 3.24 | 83.110 |

## EXAMPLE 4

A comparable paint was made, but with the rutile $TiO_2$ replaced by anatase $TiO_2$ and indicating during exchange, little, if any, thixotropy developed.

The stability/cure on this paint is:

| Storage Conditions | | | | |
|---|---|---|---|---|
| | Room Temp. pH | Room Temp. MEK Rubs | 50°C pH | 50°C MEK Rubs |
| Initial | 1.74-1.80 | 220 - 230 | N.A. | N.A. |
| 68 hrs | 1.87 | 220 - 250 | 1.82 | 220 - 250 |
| 93 hrs | 1.84 | N.A. | 1.92 | N.A. |
| 117 hrs | 1.88 | N.A. | 1.95 | N.A. |
| 141 | 1.90 | N.A. | 1.93 | N.A. |
| 11 | 1.98 | 390 | 2.07 | 390 |

Accelerated heat ageing is not diminishing the cure on this coating. Furthermore, while heat-aged aluminium-containing rutile samples show noticeable thixotropy, there is no viscosity build with the anatase sample, and no thixotropy is noted.

Further, when both were applied to water-stained hardboard, the anatase-bearing paint showed very little stain bleed, while the rutile samples showed some stain bleed.

In the following example, a commercial grade of rutile titanium dioxide was used, which is free of aluminium cations, both in manufacture and surface treatment (<0.1% by analysis).

| EXAMPLE 5 | |
|---|---|
| Raw Material | Weight (g) |
| Letdown | |
| Acrylic Copolymer Emulsion | 365 |
| Coalescing Solvent | 11 |
| Glycoluril (Cymel 1175) | 96 |
| Defoamer | 1 |
| Grind | |
| Deionised Water | 137 |
| Defoamer | 0.5 |
| Surfactant | 8 |
| Polyethylene Oxide Surfactant | 8 |
| Silica | 551 |
| Aluminium-free Commercial Titanium Dioxide | 214 |

The grind was added to the letdown and mixed 16 hours. Initial pH was 4.5.

125 grams of Amberlite 200 CH (Protonated Cation Exchange Resin, Rohm and Haas) was added to the paint with mixing. pH stabilised at 1.5. The coating was filtered and tested as follows:

pH 1.5, no pseudoplastic behaviour.

A sample was applied to sealed Leneta paper by a 75µ Bird coater, and baked 2 minutes at 120° C. It was not attacked by 100 MEK rubs or 200 water rubs.

A sample of the coating was aged 2 months at room temperature.

No viscosity change was noted. pH was now 1.7, for a change of 0.2 units over 2 months.

Cure was again test over Leneta paper (3 mill Bird coater, baked 2 minutes at 120° C). Again, there was no attack by 100 MEK rubs or 200 water rubs.

This stability compares very favourably with paint made from untreated anatase titanium dioxide in Example 4, and is far better than for paints made from aluminium-bearing rutile titanium dioxide pigments in Examples 2 and 3.

The foregoing examples indicate that substantial improved stability at room temperature and raised temperature can be obtained in pigmented coatings by using cation-free opacifying pigments in conjunction with an ion-exchange treated binder comprising a functional reactive emulsion polymer and a glycoluril derivative.

## EXAMPLE 6

### Preparation of Polymer Emulsions (Latexes)

Four latexes, A, B, C, and D containing 6, 12, 18 and 24% 2-hydroxy ethyl acrylate were made by conventional polymerisation techniques, with common surfactants. The only differences were in the monomer ratios; all were made to a theoretical Fox Tg of 10° C.

| | Latex A | Latex B | Latex C | Latex D |
|---|---|---|---|---|
| Material | Grams | Grams | Grams | Grams |
| D.I.Water | 2000 | 2000 | 2000 | 2000 |
| Anionic Surfactant #1 | 6.0 | 6.0 | 6.0 | 6.0 |
| Persulphate Initiator | 5.0 | 5.0 | 5.0 | 5.0 |
| Butyl Acrylate | 763 | 695 | 626 | 556 |
| Methyl Methacrylate | 923 | 886 | 846 | 808 |
| 2-hydroxyethyl acrylate | 108 | 216 | 324 | 432 |
| Methacrylic | 4.0 | 4.0 | 4.0 | 4.0 |
| Anionic Surfactant #2 | 6.0 | 6.0 | 6.0 | 6.0 |

These latexes will be referred to as latexes A, B, C and D.

## EXAMPLE 7

### Cation Exchange of Latexes

A 100 gram sample of each latex was put in a container with a stirrer and pH probe. With mixing, Amberlite 200 CH protonated cation exchange resin (Rohn and Haas) was added in two increments to assure complete removal of cations from the latex.

| Latex | Initial pH | +Gms. 200 CH | Intermed. pH | +Gms. 200 CH | Final pH |
|---|---|---|---|---|---|
| A | 2.6 | 30.2 | 1.8 | 15.0 | 1.8 |
| B | 2.6 | 27.6 | 1.8 | 20.0 | 1.8 |
| C | 2.6 | 27.0 | 1.7 | 22.0 | 1.8 |
| D | 2.6 | 27.0 | 1.7 | 15.0 | 1.7 |

## EXAMPLE 8

### Evaluation of Cure

Samples of each latex A, B, C and D before and after exchange were applied side-by-side onto smooth glass plates, using a 75μ Bird coater. Each plate, containing the as is (non-exchanged) and exchanged pair of films, was placed in a 120° C hot air oven for 5 minutes, then removed and cooled to room temperature. Degree of cure was measured by rubbing the cured films with a rag saturated with methyl ethyl ketone. Failure was determined when the film ruptured. Triplicate determinations were made in each case, and the average is reported in each case.

| Latex | MEK Rubs, As is | MEK Rubs, Exchanged |
|---|---|---|
| A | 12 | 30 |
| B | 11 | 208 |
| C | 14 | >400 |
| D | 18 | >400 |

## EXAMPLE 9

### Room Temperature Cure

Samples of latex D, as is (non-exchange) and after exchange, were applied to a glass plate with the 75μ Bird coater and allowed to dry at room temperature (approximately 22° C). Cure was checked by methyl ethyl ketone resistance at several times after application.

| Latex | MEK Rubs, As is | MEK Rubs, Exchanged |
|---|---|---|
| 18 hours | 13 | 23 |
| 7 days | 12 | 118 |
| 8 days | 14 | 227 |

## EXAMPLE 10

### Acid Catalysis

Samples of latex B were catalysed with 0.55% by weight and 3.0% by weight of a 40% solution of p-toluene sulphonic acid in isopropanol. They were applied as above and cured for 5 minutes at 120° F before checking for resistance to methyl ethyl ketone.

| | pH | | MEK Rubs | |
|---|---|---|---|---|
| % p-TSA Solution | Exchanged | Catalysed | Exchanged | Catalysed |
| 0.55% | 1.76 | 1.71 | 237 | 23 |
| 3.0% | 1.76 | 1.15 | 301 | 37 |

For reference, note that the uncatalysed, unexchanged control exhibits a consistent 10-15 MEK rubs, indicating that the acid catalyst causes some cure, but far less than the cation exchange process.

Accordingly, a latex containing more than 6% HEA and up to at least 24% HEA, when cation-exchanged, exhibits excellent self cure when baked 5 minutes at 250° F on glass. Room temperature cure

begins after 1 day and a fast, thermosetting reaction results. A major advantage is that the cure proceeds without any formaldehyde-containing monomers whereby this invention provides a 1-package stable, roomtemperature curing, formaldehyde-free latex paint.

## Claims

1. A coating composition comprising an aqueous emulsion of a binder, the binder comprising: either

a) from 20 to 95 parts by weight of an addition polymer which is formed from a monomer mixture excluding amino functional monomers and comprising one or more carboxyl, hydroxyl or acrylamide monomers the carboxyl, hydroxyl or amide groups being coreactive with a glycoluril, the binder also comprising from 5 to 80 parts by weight of a glycoluril, and the composition also comprising 5 to 35 parts by volume of non-volatile solids of a cation-free opacifying pigment, or

b) an addition polymer which is formed from a monomer mixture excluding amino functional monomers and comprising beta-hydroxy-ester monomers, the addition polymer being self curing by transesterification reaction between hydroxyl groups and beta-ester groups in the beta-hydroxy ester groups on application to a substrate;

in either case the composition having substantially no cations and a pH of the polymeric binder to less than 2.5 as a result of the treatment of either the composition or its components with an ion exchange resin.

2. A composition as claimed in Claim 1 in which the cation-free pigment is titanium dioxide.

3. A composition as claimed in Claim 2 in which the titanium dioxide is anatase or rutile titanium dioxide.

4. A composition as claimed in any one of Claims 1 to 3 in which the cation-free pigment is produced by removing cations from the surface of a cationically surface treated pigment.

5. A composition as claimed in Claim 1 in which the addition polymer is formed from a monomer mixture comprising between 1 and 50 parts by weight of beta-hydroxyl ester monomers, between 1 and 99 parts by weight of acrylic monomers with the balance being other ethylenically unsaturated monomers.

6. A composition as claimed in Claim 5 in which the monomer mixture comprises between 5 and 30 parts by weight of beta-hydroxy ester monomers, between 70 and 95 parts by weight of acrylic monomers with the balance being other ethylenically unsaturated monomers.

7. A composition as claimed in any one of Claims 1 to 6 which has a pH of between 1.2 and 1.8.

8. A process for producing a composition as claimed in Claim 1 which comprises the steps of

(i) copolymerising ethylenically unsaturated monomers in an aqueous medium in the presence of surfactants and initiators, the unsaturated monomers including one or more carboxyl, hydroxyl or acrylamide monomers but excluding amino functional monomers, to produce an addition polymer emulsion,

(ii) treating the addition polymer by contact with an ion exchange resin to remove cations from the composition so as to produce a polymer emulsion having a pH of less than 2.5, and

(iii)combining the ion-exchanged polymer emulsion from (ii) with a cation-free opacifying pigment having less than 0.5% by weight residual cations.

9. A process as claimed in Claim 8 in which the polymer emulsion is mixed with a glycoluril derivative prior to step (ii).

10. A process as claimed in Claim 9 in which a glycoluril derivative is treated separately with an ion exchange resin and thereafter mixed with the polymer emulsion treated with the ion-exchange resin.

11. A process for producing a composition as claimed in Claim 1 which comprises the steps of

(i) copolymerising ethylenically unsaturated monomers in an aqueous medium in the presence of surfactants and initiators, the monomers including a beta-hydroxy ester monomer but excluding amine monomers to produce a self curing emulsion polymer having pendant beta-hydroxy ester groups.

(ii) treating the polymer emulsion by contact with an ion-exchange resin so as to produce a polymer emulsion with a pH of less than 2.5.

12. A process as claimed in any one of Claims 8 to 11 in which the ion-exchange resin is a protonated cation exchange resin.

13. A process for producing a coated substrate which comprises applying a coating composition as claimed in any one of claims 1 to 8 to the substrate and allowing the composition to crosslink.

European Patent Office

# EUROPEAN SEARCH REPORT

Application number

EP 90300706.0

## DOCUMENTS CONSIDERED TO BE RELEVANT

| Category | Citation of document with indication, where appropriate, of relevant passages | Relevant to claim | CLASSIFICATION OF THE APPLICATION (Int. Cl.⁵) |
|---|---|---|---|
| X | US - A - 4 789 694 (HAHN JR.) * Claims; examples * -- | 1,5-13 | C 09 D 5/02<br>C 09 D 133/00<br>C 09 D 129/00 |
| D,X | US - A - 4 728 680 (HAHN JR.) * Claims; examples * -- | 1,5-13 | |
| D,X | US - A - 4 812 491 (HAHN JR.) * Claims; examples; column 5, lines 59-67 * ---- | 1-13 | |

TECHNICAL FIELDS SEARCHED (Int Cl.⁵)

C 09 D
C 08 F

The present search report has been drawn up for all claims

| Place of search | Date of completion of the search | Examiner |
|---|---|---|
| VIENNA | 28-03-1990 | PAMMINGER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document